**Europäisches Patentamt**

**European Patent Office**

**Office européen des brevets**

(19)

(11) Veröffentlichungsnummer: **0 285 758 B1**

(12) **EUROPÄISCHE PATENTSCHRIFT**

(45) Veröffentlichungstag der Patentschrift: **07.08.91**

(51) Int. Cl.⁵: **B65G 67/02, B65G 67/08**

(21) Anmeldenummer: **88101532.5**

(22) Anmeldetag: **03.02.88**

(54) Be- und Entladestation für Lastkraftwagen und Container.

(30) Priorität: **25.03.87 DE 3709835**

(43) Veröffentlichungstag der Anmeldung:
**12.10.88 Patentblatt 88/41**

(45) Bekanntmachung des Hinweises auf die
Patenterteilung:
**07.08.91 Patentblatt 91/32**

(84) Benannte Vertragsstaaten:
**AT BE CH DE ES FR GB GR IT LI LU NL SE**

(56) Entgegenhaltungen:
**DE-A- 2 431 542     DE-A- 2 713 135**
**FR-A- 2 320 883     GB-A- 891 147**
**US-A- 3 337 066     US-A- 3 727 777**

(73) Patentinhaber: **Gebhardt Fördertechnik GmbH**
**Postfach 304**
**W-6920 Sinsheim(DE)**

(72) Erfinder: **Gebhardt, Günter**
**Hans-Thoma-Strasse 10**
**W-6920 Sinsheim(DE)**

(74) Vertreter: **Ratzel, Gerhard, Dr.**
**Seckenheimer Strasse 36a**
**W-6800 Mannheim 1(DE)**

**Beschreibung**

Die Erfindung betrifft eine Be- und Entladestation für Lastkraftwagen und Container.

Das Beladen ist bei normalen Standard-Fahrzeugen nur durch das nacheinander Einbringen von Einzelpaletten mittels Handhubwagen oder ähnlichen, oder durch seitliches Beladen durch Gabelstapler möglich. Beschädigungen des Transportgutes sind keine Seltenheit.

Aus der DE-A-2 713 135 ist eine Vorrichtung zum selbsttätigen Verladen von Säcken gemäß dem Oberbegriff des Anspruchs 1 bekannt, bei der ein von einer Absackmaschine her förderndes Förderband vorgesehen ist. Diese Vorrichtung gewährleistet jedoch nicht das exakte Einbringen des Ladegutes in einen Container oder ein zu beladendes Fahrzeug, da die Schwenkarbeit des Förderers nicht gegeben ist.

Der Erfindung liegt daher die Aufgabe zugrunde, eine Be- und Entladestation bereitzustellen, die ein müheloses und fehlerfreies Be- und Entladen von Lastkraftwagen und Containern ermöglicht, wobei innerhalb der Ladefläche des zu beladenden Fahrzeuges jede beliebige Position mit der Be- und Entladevorrichtung ansteuerbar ist, ohne dabei von der Wagenbreite des zu beladenden Fahrzeugs abhängig zu sein, um nicht nur eine effiziente, sondern auch verkehrssichere Beladung zu gewährleisten.

Diese Aufgabe wird erfindungsgemäß dadurch gelöst, daß die Be- und Entladestation für Lastkraftwagen und Container, bestehend aus einer Verfahreinheit, einem Kettenförderer oder Rollenförderer und einem in den Lastkraftwagen oder Container einfahrbaren Transportförderer, bei der der Transportförderer und der Rollenförderer oder Kettenförderer auf der Verfahreinheit, die auf einem stationären oder verfahrbaren Grundgestell in Transportrichtung X mittels Rollen verfahrbar angeordnet ist, angeordnet sind, so ausgebildet ist, daß die Verfahreinheit auch quer zur Transportrichtung X auf dem Grundgestell verfahrbar angeordnet ist, der Transportförderer und der Rollenförderer oder Kettenförderer quer- und/oder höhenverstellbar auf der Verfahreinheit angeordnet sind, und der Transportförderer um eine vertikale Drehachse drehbar und um eine horizontale Schwenkachse schwenkbar gelagert ist.

Eine weitere, besonders bevorzugte Ausführungsform ist dadurch gekennzeichnet, daß die Verfahreinheit zur Höhenverstellung der Ketten- und Transportförderer mit einer Hubmechanik ausgestattet ist.

Eine weitere besonders bevorzugte Ausführungsform ist dadurch gekennzeichnet, daß der Transportförderer mit quer zur Transportrichtung "X" verlaufenden Stützrollen versehen ist.

Eine weitere besonders bevorzugte Ausführungsform ist dadurch gekennzeichnet, daß auf dem Grundgestell ein Höhenausgleich angeordnet ist.

Anhand der beigefügten Zeichnungen, die ein besonders bevorzugtes Ausführungsbeispiel der Erfindung zeigen, wird diese nun näher erläutert. Dabei zeigen:

Figur 1     die Be- und Entladestation außerhalb des Lastkraftwagens;

Figur 2     die Be- und Entladestation in den Lastkraftwagen eingefahren;

Figur 3     eine Draufsicht der Be- und Entladestation aus der in Figur 2 angedeuteten Richtung "B";

Figur 4     eine vergrößerte Darstellung des Transportförderers;

Figur 5     einen Querschnitt entlang der in Figur 3 angedeuteten Richtung A-A.

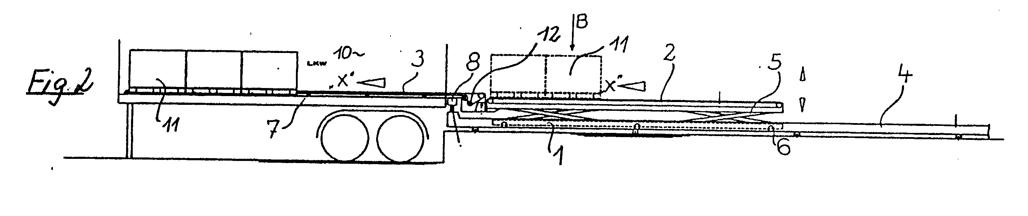

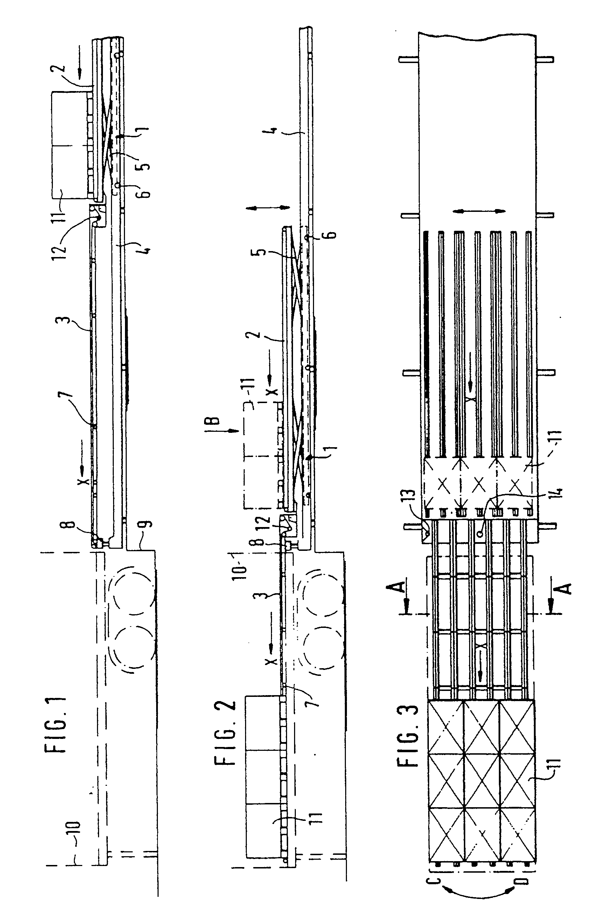

Figur 1 zeigt die Be- und Entladestation außerhalb des Lastkraftwagens 10 bzw. Containers. In diesem Ausführungsbeispiel ist der Lastkraftwagen 10 mit seinem Heck an eine Rampe 9 beigefahren, auf der sich stationär oder auch beweglich ein Grundgestell 4 befindet. Auf diesem Grundgestell 4 ist eine Verfahreinheit 1 angeordnet, die quer- und längs zur Transportrichtung "x" verfahrbar ist. Dies wird durch die an der Verfahreinheit 1 angeordneten Rollen 6 gewährleistet.

Auf der Verfahreinheit befindet sich der Rollenförderer oder Kettenförderer 2 und der Transportförderer 3. Der Kettenförderer oder Rollenförderer wird mit Paletten 11 bestückt. Der Transportförderer 3 liegt dabei auf dem Höhenausgleich 8 auf, der wie auch der Hubmechanismus 5 der Verfahreinheit 1 auf die Ladehöhe ausgerichtet wird.

Figur 2 zeigt die in den Lastkraftwagen 10 eingefahrene Be- und Entladestation.

Nachdem der Kettenförderer oder Rollenförderer 2 mit den zu versendenden Paletten 11 bestückt ist, wird die Verfahreinheit 1 in die Transportrichtung "X" gegen den Lastkraftwagen 10 gefahren. Dabei wird der Transportförderer 3 in den Laderaum geschoben und stützt sich während dieses Vorganges auf dem Fahrzeugboden mit Rollen 7 ab.

Wenn der Transportförderer 3 das Ende der Ladefläche erreicht hat, wird die Verfahreinheit 1 gestoppt und der Antrieb 12 des Transportförderers 3 und des Kettenförderers oder Rollenförderers 2 betätigt. Somit werden die Paletten vom Kettenförderer oder Rollenförderer 2 auf den Transportförderer 3 übergeleitet. Sobald die erste Palette 11 am Ende der Ladefläche angelangt ist, wird die Verfahreinheit 1 in entgegengesetzter Transportrichtung "Y" bewegt. Beim Zurückziehen des Transportförderers 3 gleitet die Ladung über das abgeschrägte Ende des Transportförderers 3 auf die Ladefläche des Lastkraftwagens 10.

Dabei ist ein besonderes Merkmal der Erfindung, daß die Rückfahrtgeschwindigkeit der Verfahreinheit 1 der Transportgeschwindigkeit des Transportförderers 3 entspricht, also die Ladung praktisch steht und somit keine ruckartigen Bewegungen auftreten. Der Entladevorgang erfolgt in umgekehrter Reihenfolge der Arbeitstakte.

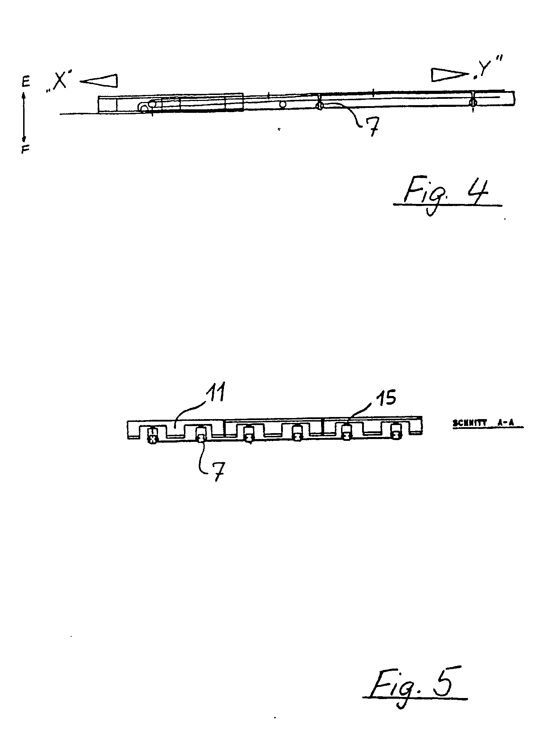

Figur 3 zeigt eine Draufsicht der Be- und Entladestation aus der in Figur 2 angedeuteten Richtung B. In dieser Ansicht sind die Schwenkpunkt 13 bzw. Drehpunkte 14 ersichtlich.

Der Transportförderer 3 ist um die Drehachse 14 nach C bzw. D drehbar bzw. wie in Figur 4 angedeutet nach E bzw. F schwenkbar.

Figur 5 zeigt einen Schnitt durch den Transportförderer 3 entlang der in Figur 3 angedeuteten Schnittlinie A-A.

Hierbei wird das Aufliegen der Paletten 11 auf den Transportsegmenten deutlich. Mit den Stützrollen 7 liegt der Transportförderer auf dem Fahrzeug- oder dem Container-Boden auf.

## Patentansprüche

1. Be- und Entladestation für Lastkraftwagen und Container, bestehend aus einer Vertahreinheit (1), einem Rollenförderer oder Kettenförderer (2) und einem in den Lastkraftwagen oder Container einfahrbaren Transportförderer (3), wobei der Transportförderer (3) und der Rollenförderer oder Kettenförderer (2) auf der Verfahreinheit (1), die auf einem stationären oder verfahrbaren Grundgestell (4) in Transportrichtung (X) mittels Rollen (6) verfahrbar angeordnet ist, angeordnet sind,
dadurch gekennzeichnet,
daß die Verfahreinheit (1) auch quer zur Transportrichtung "X" auf dem Grundgestell (4) verfahrbar angeordnet ist, der Transportförderer (3) und der Rollenförderer oder Kettenförderer (2) quer- und/oder höhenverstellbar auf der Verfahreinheit (1) angeordnet sind und der Transportförderer um eine vertikale Drehachse (14) drehbar und um eine horizontale Schwenkachse (13) schwenkbar gelagert ist.

2. Be- und Entladestation für Lastkraftwagen und Container nach Anspruch 1,
dadurch gekennzeichnet,
daß die Verfahreinheit zur Höhenverstellung der Ketten-und Transportförderer mit einer Hubmechanik (5) ausgestattet ist.

3. Be- und Entladestation für Lastkraftwagen und Container nach den Ansprüchen 1 - 2,
dadurch gekennzeichnet,
daß der Transportförderer (3) mit quer zur Transportrichtung "X" verlaufenden Stützrollen (7) versehen ist.

4. Be- und Entladestation für Lastkraftwagen und Container nach den Ansprüchen 1 - 3,
dadurch gekennzeichnet,
daß auf dem Grundgestell ein Höhenausgleich (8) angeordnet ist.

## Claims

1. A loading and unloading station for lorries and containers, comprising a travelling unit (1), a roller conveyor or chain conveyor (2) and a transfer conveyor (3) which can be moved into the lorry or container, wherein the transfer conveyor (3) and the roller conveyor or chain conveyor (2) are mounted on the travelling unit (1) which is arranged to be able to travel in the conveying direction (X) by means of rollers (6) on a stationary or movable base frame (4), characterised in that the travelling unit (1) is also arranged to be movable transversely to the conveying direction (X) on the base frame (4), the transfer conveyor (3) and the roller conveyor or chain conveyor (2) are mounted for transverse and/or vertical adjustment on the travelling unit (1), and the transfer conveyor is mounted to turn about a vertical axis of rotation (14) and is mounted to pivot about a horizontal pivot axis (13).

2. A loading and unloading station for lorries and containers according to Claim 1, characterised in that for vertical adjustment of the chain conveyor and transfer conveyor the travelling unit is provided with a lifting mechanism (5).

3. A loading and unloading station for lorries and containers according to either Claim 1 or Claim 2, characterised in that the transfer conveyor (3) is provided with support rollers (7) extending transversely to the conveying direction (X).

4. A loading and unloading station for lorries and containers according to Claims 1 to 3, characterised in that height-compensating means (8) are disposed on the base frame.

## Revendications

1. Poste de chargement et de déchargement pour des camions et des conteneurs, constitué par une unité mobile (1), un convoyeur à rouleaux ou un convoyeur à chaînes (2) et un convoyeur de transport (3) pouvant être introduit dans le camion ou le conteneur, et dans lequel le convoyeur de transport (3) et le convoyeur à rouleaux ou le convoyeur à chaîne (2) sont installés sur l'unité mobile (1), qui est disposée sur un châssis de base (4) fixe ou mobile, de manière à pouvoir se déplacer dans la direction de transport (X) à l'aide de galets (6),
caractérisé en ce
que l'unité mobile (1) est disposée de manière à être déplaçable également transversalement par rapport à la direction de transport "X" sur le châssis de base (4), que le convoyeur de transport (3) et le convoyeur à rouleaux ou le convoyeur à chaîne (2) sont disposés de manière à être déplaçables transversalement et/ou en hauteur sur l'unité mobile (1) et que le convoyeur de transport est monté de manière à pouvoir tourner autour d'un axe de rotation vertical (14) et à pouvoir basculer autour d'un axe horizontal de basculement (13).

2. Poste de chargement et de déchargement pour camions et conteneurs selon la revendication 1,
caractérisé en ce
que l'unité mobile est équipée d'un système mécanique de levage (5) pour le réglage en hauteur du convoyeur à chaîne et du convoyeur de transport.

3. Poste de chargement et déchargement pour camions et conteneurs selon les revendications 1-2,
caractérisé en ce
que le convoyeur de transport (3) comporte des rouleaux d'appui (7) qui s'étendent transversalement par rapport à la direction de transport "X".

4. Poste de chargement et déchargement pour camions et conteneurs selon la revendication 1-3,
caractérisé en ce
qu'un système de compensation de hauteur (8) est disposé sur le châssis de base.

Fig. 2

FIG. 1

FIG. 2

FIG. 3

EP 0 285 758 B1

_Fig. 4_

SCHNITT A-A

_Fig. 5_